# EUROPEAN PATENT APPLICATION

(11) **EP 4 273 843 A1**
(43) Date of publication of application: **08.11.2023**
(21) Application number: 22775078.3
(22) Date of filing: 08.03.2022
(51) Int. Cl.: G09C 1/00, G06F 21/60, G06F 21/62, H04L 9/30

(54) **DATA SHARING SYSTEM, DATA SHARING METHOD, AND DATA SHARING PROGRAM**

(30) Priority: 23.03.2021 JP 2021048066
(71) Applicant: Eaglys Inc., Tokyo 1510051 (JP)
(72) Inventor: IMABAYASHI Hiroki, Tokyo 151-0051 (JP)
(74) Representative: Lewis Silkin LLP
(86) International application number: PCT/JP2022/009938
(87) International publication number: WO 2022/202284

(57) **Abstract**

In a data sharing system, the data possessed by the others is utilized safely without disclosing the contents of the data to the others. A data sharing system of the present disclosure includes a plurality of data providing devices; a key management device; a proxy device and a calculation device, wherein the key management device includes a key management unit configured to manage a system key, each of the plurality of data providing devices includes: a first sensitive data acquisition unit configured to acquire a sensitive data; and an encryption unit configured to encrypt the sensitive data by a predetermined encryption scheme using a user key which is different from the system key, the proxy device includes: a second sensitive data acquisition unit configured to acquire the encrypted sensitive data from the plurality of data providing devices; and a conversion unit configured to execute a conversion of the acquired sensitive data into the sensitive data in a predetermined encryption space based on the system key, and the calculation device includes an execution unit configured to execute a secure computing based on the converted sensitive data.

## Description

### TECHNICAL FIELD

The present disclosure relates to a data sharing system, a data sharing method and a data sharing program.

### BACKGROUND ART

Due to the development of an electronic commerce service and IoT (Internet of Things) provided on the Internet, the technology for performing a statistical analysis and a machine learning on a large amount of data possessed not only by own company but also by the other companies (others) is required. For example, Patent document 1 discloses an encrypted statistical processing system wherein the statistical processing is executed on the encrypted data encrypted by using different public keys in the encrypted state. In the above described system, a proxy key is generated for converting the encrypted data encrypted by using a predetermined public key into the encrypted data which can be decrypted by using a secret key corresponding to another public key different from the predetermined public key and the encrypted statistical data (processing result) is generated from the data encrypted based on the proxy key.

### PRIOR ART DOCUMENTS

### [Patent Documents]

[Patent document 1] International Publication No. WO2012/169153

### DISCLOSURE OF THE INVENTION

### [Problems to be Solved by the Invention]

However, in the system described in Patent document 1, when the encrypted data owned by themselves is utilized in the encrypted state to interactively generate a full public key using a public key and a secret key of a plurality of service providing devices and generate individual proxy key based on the full public key and the secret key of each of the service providing devices, the public key and the secret key of the others participated in the system are required. Thus, the communication amount between the service providing devices becomes huge.

In recent years, as the machine learning and the artificial intelligence technology are spread, the technology capable of treating a large amount of data while considering the problem in information security such as information leakage and illegal use is desired. The system described in Patent document 1 is a statistical processing based on a partial statistical processing based on the data provided by a part of the service providing devices. Thus, the system described in Patent document 1 does not perform the processing of global statistics and machine learning performed by integrating the data of a plurality of service providers expecting higher prediction accuracy.

Accordingly, the present disclosure is made for solving the above described problems and the purpose of the present disclosure is to provide a data sharing system utilizing the data possessed by the others without disclosing the sensitive data to the others.

### [Means for Solving the Problem]

In order to achieve the above described purpose, the data sharing system of the present disclosure includes: a plurality of data providing devices; a key management device; a proxy device; and a calculation device, wherein the key management device includes a key management unit configured to manage a system key, each of the plurality of data providing devices includes: a first sensitive data acquisition unit configured to acquire a sensitive data; and an encryption unit configured to encrypt the sensitive data by a predetermined encryption scheme using a user key which is different from the system key, the proxy device includes: a second sensitive data acquisition unit configured to acquire the encrypted sensitive data from the plurality of data providing devices; and a conversion unit configured to execute a conversion of the acquired sensitive data into the sensitive data in a predetermined encryption space based on the system key, and the calculation device includes an execution unit configured to execute a secure computing based on the converted sensitive data.

In order to achieve the above described purpose, the data sharing method of the present disclosure is the method executed in a system having a plurality of data providing devices, a key management device, a proxy device and a calculation device, the data sharing method comprising: a step of managing a system key by the key management device; a step of acquiring a sensitive data by the plurality of data providing devices; a step of encrypting the sensitive data by a predetermined encryption scheme using a user key which is different from the system key by the plurality of data providing devices; a step of acquiring the encrypted sensitive data from the plurality of data providing devices by the proxy device; a step of converting the acquired sensitive data into a predetermined encryption space based on the system key by the proxy device; and a step of executing a secure computing based on the converted sensitive data by the calculation device.

In order to achieve the above described purpose, a data sharing program of the present disclosure is a data sharing program for making a system execute the data sharing program, the system comprising: a plurality of data providing devices; a key management device; a proxy device; and a calculation device, wherein the key management device is configured to execute a step of managing a system key, the plurality of data providing devices is configured to execute: a step of acquiring a sensitive data; and a step of encrypting the sensitive data by a predetermined encryption scheme using a user key which is different from the system key; the proxy device is configured to execute: a step of acquiring the encrypted sensitive data from the plurality of data providing devices; and a step of converting the acquired sensitive data into a predetermined encryption space based on the system key; a step of executing a secure computing based on the converted sensitive data, and the calculation device is configured to execute a step of executing a secure computing based on the converted sensitive data.

### [Effects of the Invention]

In the data sharing system of the present disclosure, the data possessed by the others can be utilized without disclosing the contents of the data to the others.

### BRIEF DESCRIPTION OF THE DRAWINGS

Fig. 1 is a drawing showing a configuration of a data sharing system 1.
Fig. 2 is a schematic diagram of the processing in the embodiment 1.
Fig. 3 is a functional block diagram showing an example of a functional configuration of a data providing server 100.
Fig. 4 is a functional block diagram showing an example of a functional configuration of a key management server 200.
Fig. 5 is a functional block diagram showing an example of a functional configuration of a proxy server 300.
Fig. 6 is a functional block diagram showing an example of a functional configuration of a calculation server 400.
Fig. 7 is a functional block diagram showing an example of a functional configuration of a terminal device 500.
Fig. 8 is a drawing showing an example of the data structure of sensitive data.
Fig. 9 is a drawing showing an example of the data structure of the encrypted sensitive data.
Fig. 10 is a drawing showing an example of the data structure of the integrated data.
Fig. 11 is a flow chart showing an example of the processing concerning the embodiment 1.
Fig. 12 is a block diagram showing a hardware configuration of the proxy server 300.
Fig. 13 is a schematic diagram of the processing in the embodiment 2.
Fig. 14 is a functional block diagram showing an example of a functional configuration of a data providing server 600.
Fig. 15 is a functional block diagram showing an example of a functional configuration of a proxy server 700.
Fig. 16 is a flow chart showing an example of the processing concerning the embodiment 2.

### MODES FOR CARRYING OUT THE INVENTION

Hereafter, the embodiments of the present disclosure will be explained with reference to the drawings. In all drawings explaining the embodiments, the same reference signs are assigned to the common component to omit the repeated explanation. Note that the following embodiments do not unreasonably limit the content of the present disclosure described in the claims. In addition, all components disclosed in the embodiments are not necessarily essential components of the present disclosure.

### <Outline of invention>

In recent years, the number of the organizations who possess a large amount of sensitive data such as customer information has been increased. Because of this, a cloud service has been developed for performing statistical analysis processing and machine learning and the like by utilizing not only the sensitive data possessed by own organization but also the sensitive data possessed by the other organizations to obtain new knowledge in businesses and lead to services. However, extreme care should be paid when treating the sensitive data while considering the security and protecting the privacy, for example. Thus, it is required to execute the data processing such as a retrieval, a totalization analysis, a statistics and a machine learning contributing to detection and prediction with high accuracy while preventing the information leakage of the sensitive data owned by own organization.

A "secure computing" is conventionally known for executing the calculation in the encrypted state as the technology for achieving the data processing while preventing the information leakage caused by illegal access. For example, the homomorphic encryption is one of the methods for realizing the "secure computing." The homomorphic encryption is the encryption scheme having homomorphism. In the homomorphic encryption, the calculation such as the numerical calculation can be executed on the encryption data encrypted by using a certain public key in a state that the data is encrypted. In order to execute the data processing of a plurality of encryption data with realistic performance using the homomorphic encryption, the sensitive data should be encrypted by the public key existing in the identical (same) encryption space (cipher space) (i.e., encrypted by the same public key).

Therefore, the data sharing system of the present invention includes a key management device configured to manage a system key for converting the encryption data into the identical encryption space. In addition, each of the data providing devices which corresponds to each organization joining the system encrypts the sensitive data by a predetermined encryption scheme using a user key which is different from the system key and transmits the encrypted sensitive data to the proxy device. The proxy device converts the acquired encrypted sensitive data into a predetermined encryption space based on the system key. Then, the calculation device executes the secure computing based on the converted sensitive data. An execution result of the secure computing executed on the sensitive data which is converted into a predetermined encryption space based on the system key (corresponding to the encryption key) can be decrypted by the system key (corresponding to the decryption key). In the following specification, "secure computing" means the processing of executing the calculation in a state that the data is encrypted, and "calculation" includes the calculation related to addition, subtraction, multiplication and division and the calculation related to the retrieval, the analysis and the machine learning.

### [Embodiment 1]

In the present embodiment, a proxy server 300 converts the sensitive data encrypted in each of data providing servers 100 into the identical encryption space by a re-encryption key without decrypting the encrypted sensitive data.

### (Configuration of data sharing system 1)

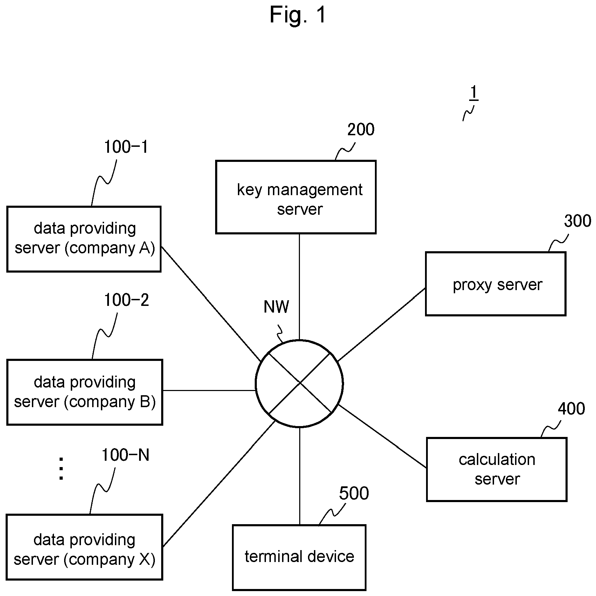

Fig. 1 is a drawing showing a configuration of a data sharing system 1 of the present embodiment. The configuration of the data sharing system 1 of the embodiment 1 will be explained with reference to Fig. 1.

The data sharing system 1 includes data providing servers 100-1, 100-2, ---, 100-N (N is natural number), a key management server 200, a proxy server 300, a calculation server 400 and a terminal device 500. In Fig. 1, the data providing servers 100-1, 100-2, ---, 100-N, the key management server 200, the proxy server 300, the calculation server 400 and the terminal device 500 are communicatively connected with each other via a network NW. The network NW is, for example, WAN (Wide Area Network), LAN (Local Area Network), optical line network, intranet or the like. The network NW can be comprised of arbitrary network. The data sharing system 1 is a platform that enables each of the organizations joined in the system to use the data possessed by each of the organizations without disclosing the detailed contents of the data to the other organizations. Note that the organization is not limited to a company and a party. The organization can be a group such as a department, a division, a group and a team divided according to the role.

In the following explanation, the data providing servers 100-1, 100-2, ---, 100-N are referred to as a data providing server 100 unless it is necessary to distinguish them with each other.

The data providing server 100 is associated with the organization joined in the platform. The data providing server 100 encrypts the sensitive data possessed by the organization and transmits the encrypted data to the key management server 200. In Fig. 1, the data providing server 100-1 is associated with "company A," the data providing server 100-2 is associated with "company B" and the data providing server 100-N is associated with "company X," for example.

The data providing server 100 encrypts the sensitive data by the predetermined encryption scheme using the user key which is different from the later described system key and transmits the encrypted sensitive data to the proxy server 300. Note that the data providing server 100 can store and manage the user key in own server or in the other information processing device. For example, the management can be entrusted to a KMS (Key Management System). In addition, the data providing server 100 generates the re-encryption key based on the system key and the user key and transmits the generated re-encryption key to the proxy server 300.

The sensitive data can be the data including attribute values of each attribute item (column). The data structure of the sensitive data will be described later. It is also possible for the data providing server 100 to encrypt a part of the attribute values of the sensitive data by the predetermined encryption scheme.

The key management server 200 manages the system key. The key management server 200 is a trusted organization where the decryption key for decrypting the encryption data is managed in a suitable manner, for example. However, the key management server 200 can be included in the proxy server 300. Namely, the proxy server 300 can have the function of managing the system key.

The proxy server 300 acquires the sensitive data and the re-encryption key from each of the data providing servers 100 and converts the acquired sensitive data into the sensitive data in a predetermined encryption space by the re-encryption key.

The calculation server 400 executes the secure computing on the sensitive data converted in the proxy server 300. The calculation server 400 executes the retrieval, the integration, the analysis, the data mining, the model learning of the machine learning and the inference as the secure computing, for example. For example, the model learning and the inference can be executed by the analysis algorithm of statistical method and deep learning. In addition, the calculation server 400 can integrate a plurality of converted sensitive data and execute the secure computing on the integrated sensitive data. The execution result of the secure computing can be decrypted by the system key (corresponding to the decryption key).

The terminal device 500 is an information processing device used by a user of the data sharing system 1. The terminal device 500 is a PC (Personal Computer), a smartphone or a tablet terminal, for example. In addition, the terminal device 500 can be wearable terminals such as a head mount display and the like or AR (Augmented Reality)/VR (Virtual Reality)/MR (Mixed Reality) devices. The user can be an employee of the organization (e.g., company A) that joins the platform and provides the sensitive data, for example. In this case, the information processing device can be configured to be linked with the data providing server 100 of the organization to which the user belongs.

The terminal device 500 transmits the processing request of the data processing to the calculation server 400 wherein the data processing is targeted at the sensitive data provided from the data providing server 100. The data processing includes the retrieval and totalization processing and/or the statistical processing, for example. In addition, the data processing includes the processing of integrating the sensitive data. The processing request (processing query) of the data processing is written by CLI (Command Line Interface) such as SQL statement or GUI (Graphical User Interface), for example.

Hereafter, the functional configuration and the processing of each of the servers and the like constituting the above described data sharing system 1 will be explained.

Note that the functional block and the processing block indicating each of the functional configurations can be achieved by one or a plurality of devices, computer processors or a distribution group of computer processors. For example, the function executed by the key management server 200, the proxy server 300 and the calculation server 400 can be achieved by one device.

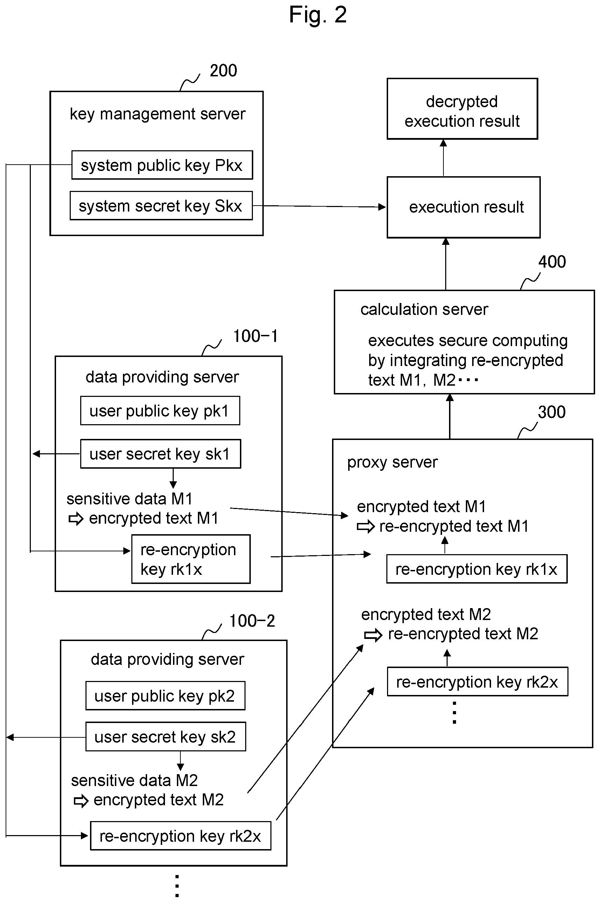

Fig. 2 is a schematic diagram of the processing in the embodiment 1.
The outline of the processing in the data sharing system 1 will be explained with reference to Fig. 2.

The embodiment 1 uses "proxy re-encryption scheme" and the proxy server 300 converts the sensitive data encrypted in the data providing server 100 into a predetermined encryption space without decrypting the sensitive data. Although the scheme based on the public key encryption scheme is explained in Fig. 2, the conversion can be also achieved by using the common key encryption scheme.

### (1) Key generation step

The key management server 200 generates a key pair of a system public key Pkx and a system secret key Skx as the system key.

Each of the data providing servers 100 generates a key pair of a user public key pk and a user secret key sk of each of the data providing servers 100 as the user key. The user key and the system key are generated by conventionally known key generation algorism, for example.

In addition, each of the data providing servers 100 acquires the system public key Pkx from the key management server 200 and generates a re-encryption key rk from the user secret key sk and the system public key Pk. The generated re-encryption key rk is transmitted to the proxy server 300. The re-encryption key rk can be generated by a key generation algorism based on the user secret key sk and the system public key Pk, for example. Alternatively, the re-encryption key rk can be generated by encrypting the user secret key sk by the system public key Pk. The proxy server 300 stores the re-encryption key rk in association with each of the data providing servers 100.

Although the re-encryption key rk is generated in the data providing server 100 in Fig. 2, it is also possible to generate the re-encryption key rk in the proxy server 300. For example, a secure communication channel is established between the proxy server 300 and the data providing server 100, and the proxy server 300 acquires the user secret key sk from each of the data providing servers 100. The proxy server 300 acquires the system public key Pkx from the key management server 200, generates each re-encryption key rk using the user secret key sk corresponding to each of the data providing servers 100 and the system public key Pkx, and stores the re-encryption key rk in association with each of the data providing servers 100.

### (2) Registration step

The data providing server 100 encrypts the sensitive data by the user public key pk to generate an encrypted text M. The generated encrypted text M is transmitted to the proxy server 300. The proxy server 300 registers (stores) each encrypted text M as the data provided from the organization joining the data sharing system 1.

### (3) Data processing step

The calculation server 400 requests the sensitive data as the object of the processing request to the proxy server 300 in accordance with the processing request requested from the terminal device 500 (not illustrated in Fig. 2), for example.

The proxy server 300 encrypts the encrypted text M as the object of the data processing by the re-encryption key rk generated in the data providing server 100 transmitting the encrypted text M to generate re-encrypted text M. The proxy server 300 transmits the re-encrypted text M to the calculation server 400. The calculation server 400 executes the secure computing on the re-encrypted text. At this time, the calculation server 400 can integrate each re-encrypted text M acquired from the proxy server 300 and execute the secure computing. The integration of the data will be described later.

The execution result of the secure computing is transmitted to the terminal device 500 from which the data processing is requested. In addition, the terminal device 500 used by a user having the authority of using the execution result can acquire the system secret key Skx from the key management server 200. The terminal device 500 can use the result of the data processing by decrypting the execution result using the system secret key Skx.

In addition, the execution result of the secure computing can be transmitted to the terminal device 500 from which the data processing is requested via the proxy server 300. For example, the calculation server 400 transmits the execution result to the proxy server 300. The proxy server 300 acquires the system secret key Skx from the key management server 200 and decrypts the execution result transmitted from the calculation server 400. Then, the proxy server 300 encrypts the decrypted execution result by a session key used in a secure communication path established between the proxy server 300 and the terminal device 500 and transmits the encrypted execution result to the terminal device 500. The terminal device 500 can use the result of the data processing by decrypting the execution result by using the session key.

As described above, the method of converting the encrypted text into the identical encryption space by the public key encryption scheme is explained in Fig. 2. In case of the common key encryption scheme, this can be achieved by using "one-time pad." In the one-time pad, the encryption is executed by regarding the plaintext as the bit string and performing an exclusive-OR operation on random bit string (common key) having the same length bit by bit. For the decryption, the random bit string and the exclusive-OR operation of the encryption text used for the encryption can be used. In addition, the re-encryption key is generated by the exclusive-OR operation of a user common key (user key) and a system common key (system key). The data providing server 100 generates the encrypted text M by the exclusive-OR operation of the sensitive data and the user common key. The proxy server 300 generates the re-encryption text M by the exclusive-OR operation of the encrypted text M and the re-encryption key.

Although the case of generating the re-encryption key by the data providing server 100 is explained in Fig. 2, it is also possible to generate the re-encryption key by the proxy server 300 as described above. For example, the proxy server 300 generates the re-encryption key by using the system public key acquired from the key management server 200 and the user secret key acquired from the data providing server 100. However, the user secret key acquired from each of the data providing servers 100 should be suitably managed in a reliable environment in the proxy server 300.

Although the calculation server 400 requests the sensitive data as the object of the processing request to the proxy server 300 in accordance with the processing request from the terminal device 500 and the re-encrypted text is generated in the proxy server 300 in the explanation of Fig. 2, it is also possible that the proxy server 300 periodically executes the processing of generating the re-encrypted text and stores the re-encrypted text. Since the above described configuration is adopted, when the calculation server 400 requests the sensitive data as the object of the processing request to the proxy server 300, the calculation server 400 can acquire the re-encrypted text without waiting the generation process of the re-encrypted text.

### (Functional configuration of data providing server 100)

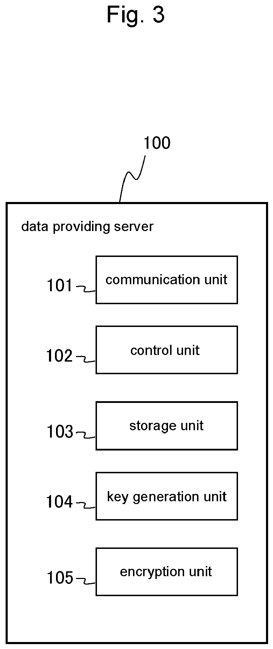

Fig. 3 is a functional block diagram showing an example of a functional configuration of the data providing server 100. An example of the functional configuration of the data providing server 100 will be explained with reference to Fig. 3.

The data providing server 100 includes a communication unit 101, a control unit 102, a storage unit 103, a key generation unit 104 and an encryption unit 105.

The communication unit 101 includes a communication interface circuit so that the data providing server 100 establishes the communication with the servers and the devices via a network NW according to a predetermined communication protocol. The predetermined communication protocol is TCP/IP (Transmission Control Protocol/Internet Protocol), for example. The communication unit 101 transmits the received data to the control unit 102 and transmits the data received from the control unit 102 to the servers and the devices via the network NW. The communication unit 101 can also transmit and receive the data to/from the functional blocks other than the control unit 102 in the data providing server 100. Note that the communication unit 101 transmits and receives the data to/from the devices connected via the network NW, the devices connected locally and the like using a secure communication channel where security is ensured. The explanation of the method for constructing the secure communication channel and the communication method is omitted since they are well known technology using a common key (e.g., session key), a public key and the like.

The communication unit 101 corresponds to the first sensitive data acquisition unit. For example, the communication unit 101 acquires the sensitive data possessed by the organization from the organization joined in the platform. In Fig. 1, the data providing server 100-1 associated with the company A can acquire the sensitive data from the terminal device 500 operated by the employee of the company A. In the present embodiment, the sensitive data is the information related to the individual, for example. The sensitive data is the attribute value (string or numerical value) of the attribute item (column) such as the age, the gender, the income, the residential area and the purchase information. In addition, the sensitive data includes an identifier (string, numerical value or combination thereof) as the attribute item so that the identifier functions as an integrated key for integrating the sensitive data. The common ID for uniquely identifying the individual can be used as the identifier. The sensitive data can be integrated based on the identifier. The sensitive data is not limited to the information related to the individual. The sensitive data can be log data related to the device, for example. The data structure of the sensitive data and the integrated data will be described in detail later.

The communication unit 101 corresponds to the system key acquisition unit and acquires the system key (system public key and/or system common key) from the key management server 200. The acquired system key is stored in the storage unit 103.

The control unit 102 controls the functions of the data providing server 100. The control unit 102 is a processor such as a CPU (Central Processing Unit) operated based on the programs preliminarily stored in the storage unit 103. Note that a DSP (Digital Signal Processor) or the like can be used as the control unit 102. In addition, control circuits such as an LSI (Large Scale Integration), an ASIC (Application Specific Integrated Circuit) and an FPGA (Field-Programming Gate Array) can be used as the control unit 102.

The storage unit 103 includes a memory device such as a RAM (Random Access Memory) and a ROM (Read Only Memory), a fixed disk device such as a hard disk drive or a portable disk device such as a flexible disk and an optical disc, for example. In addition, the storage unit 103 stores computer programs, encryption programs, keys and the like used for various processing of the data providing server 100. The computer programs can be installed in the storage unit 103 from a portable computer-readable recording medium using a conventionally known setup program, for example. The portable recording medium can be a CD-ROM (Compact Disc Read Only Memory) and a DVD-ROM (Digital Versatile Disc Read Only Memory), for example. The computer programs can be installed from a predetermined server, for example.

The key generation unit 104 generates the user key. The key generation unit 104 generates the key in accordance with the encryption scheme requested by the encryption unit 105, for example. For example, when the encryption scheme is the homomorphic encryption scheme (e.g., Paillier method) where the calculation can be performed in the encrypted state, a key pair of a user public key and a user secret key is generated.

When the encryption scheme is an order-preserving encryption scheme (OPE scheme: Order Preserving Encryption) where the magnitude relation is not changed between the encrypted text and the plaintext or a retrievable encryption scheme where the coincidence of the plaintext can be judged in the encrypted state, the user common key is generated. As described above, the user key can be a key pair of the user public key and the user secret key in some cases, while the user key can be the user common key in other cases. Note that the explanation of key generation algorithm is omitted since the key generation algorithm is conventionally known technology.

In addition, the key generation unit 104 generates the re-encryption key based on the user key and the system key. In case of the public key encryption scheme, the re-encryption key is generated by using the user secret key and the system public key. In case of the common key encryption scheme, the re-encryption key is generated by using the user common key and the system common key. Note that the re-encryption key can be generated by a key generation algorithm using the user key and the system key. Alternatively, the re-encryption key can be generated by encrypting the user key by the system key.

The key generation unit 104 stores the generated key, parameters for generating the key and the like in the storage unit 103, for example. The key generation unit 104 can store the generated key in association with the encryption scheme, the data (e.g., attribute item, column) of the object to be encrypted, the corresponding data providing server and the like in the storage unit 103.

The encryption unit 105 encrypts the sensitive data by the predetermined encryption scheme using the user key which is different from the system key. The encryption unit 105 encrypts at least a part of the attribute values of the attribute items included in the sensitive data by the predetermined encryption scheme, for example. The predetermined encryption scheme includes the encryption scheme that can perform the calculation of at least a part of the attribute values of the sensitive data acquired by the communication unit 101 in the encrypted state. For example, the predetermined encryption scheme can be a homomorphic encryption scheme, an order-preserving encryption scheme, AES (Advanced Encryption Standard), DES (Data Encryption Standard), the retrievable encryption, SHA (Secure Hash Algorithm), MD5 (Message Digest algorithm 5) and the like. As described above, the "calculation" includes the calculation related to addition, subtraction, multiplication and division and the calculation related to the retrieval and the analysis. In the present embodiment, when the data format of the attribute value of the attribute item included in the sensitive data is a numerical value (corresponding to the first attribute value), the encryption unit 105 performs the encryption using the homomorphic encryption scheme (e.g., Paillier scheme, Lifted-Elgamal scheme, Somewhat Homomorphic Encryption scheme, Fully Homomorphic Encryption scheme) and/or the order-preserving encryption scheme (OPE scheme) (corresponding to the first encryption scheme). Since the processing efficiency varies depending on the encryption scheme and the content of the data processing, each of the attribute items can be stored in a plurality of encryption schemes such as the attribute item encrypted by the homomorphic encryption scheme, the attribute item encrypted by the order-preserving encryption scheme and the attribute item encrypted by the later described retrievable encryption scheme.

When the data format is the string (corresponding to the second attribute value), the encryption is performed by using the retrievable encryption scheme or the AES encryption where the complete matching is possible in the encrypted text, for example (corresponding to the second encryption scheme). Note that the above described encryption schemes applied depending on the data format are merely examples. The organization possessing the sensitive data can arbitrarily determine the target attribute value of the attribute item to be encrypted and the encryption scheme used for the encryption. In addition, it is also possible to determine whether or not to encrypt the sensitive data according to the intention of the individual.

In the present embodiment, the identifier included as the attribute item is not encrypted. Consequently, the calculation server 400 can generate the data (integrated data) in which the sensitive data converted into the identical encryption space is integrated based on the identifier by the encryption using the re-encryption key. The integrated data will be explained later. The explanation of encryption algorithm is omitted since the encryption algorithm is conventionally known technology. As another embodiment, the encryption unit 105 can encrypt the identifier included as the attribute item in another embodiment.

### (Functional configuration of key management server 200)

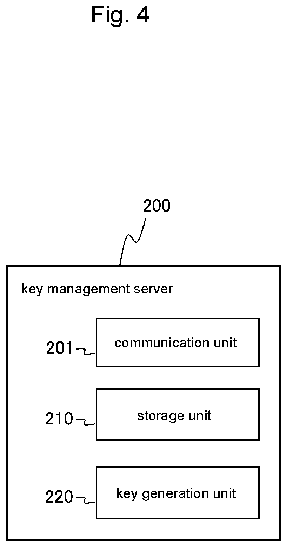

Fig. 4 is a functional block diagram showing an example of a functional configuration of the key management server 200. With reference to Fig. 4, an example of the functional configuration of the key management server 200 will be explained.

The key management server 200 includes a communication unit 201, a storage unit 210 and a key generation unit 220.

The communication unit 201 includes a communication interface circuit so that the key management server 200 can establish the communication with the other servers and the devices via the network NW according to a predetermined communication protocol. The communication unit 201 transmits the system key generated in the key generation unit 220 to the servers and the devices via the network NW. Note that the communication unit 201 transmits and receives the data to/from the devices and the like via the network NW using a secure communication channel where security is ensured. The explanation of the method of constructing the secure communication channel and the communication method is omitted since they are well known technology.

The storage unit 210 corresponds to the key management unit configured to manage the system key generated in the key generation unit 220. The storage unit 210 includes a memory device such as a RAM (Random Access Memory) and a ROM (Read Only Memory), a fixed disk device such as a hard disk drive or a portable disk device such as a flexible disk and an optical disc, for example. In addition, the storage unit 210 stores computer programs, database, tables and the like used for various processing of the key management server 200. The computer programs can be installed in the storage unit 210 from a portable computer-readable recording medium using a conventionally known setup program, for example. The portable recording medium can be a CD-ROM (Compact Disc Read Only Memory) and a DVD-ROM (Digital Versatile Disc Read Only Memory), for example. The computer programs can be installed from a predetermined server, for example.

The key generation unit 220 generates the system key. The key generation unit 220 can generate the key corresponding to the encryption scheme to be applied to the sensitive data, for example. For example, when the encryption scheme is the public key encryption scheme such as the homomorphic encryption scheme (Paillier scheme), a key pair of the system public key and the system secret key is generated.

For example, when the encryption scheme is the common key encryption scheme such as the order-preserving encryption scheme and the retrievable encryption scheme, the user common key is generated. As described above, the system key is a key pair of the system public key and the system secret key in some cases, while the system key is the system common key in other cases. Note that the explanation of key generation algorithm is omitted since the key generation algorithm is conventionally known technology.

### (Functional configuration of proxy server 300)

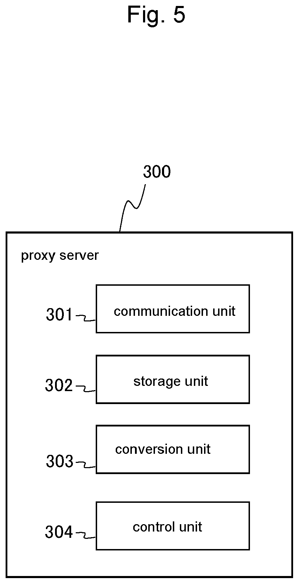

Fig. 5 is a functional block diagram showing an example of a functional configuration of the proxy server 300. With reference to Fig. 5, an example of the functional configuration of the proxy server 300 will be explained.

The proxy server 300 includes a communication unit 301, a storage unit 302, a conversion unit 303 and a control unit 304.

The communication unit 301 corresponds to the second sensitive data acquisition unit configured to acquire the encrypted sensitive data from the plurality of data providing servers 100. The communication unit 301 has a similar function as the communication unit 101 of the data providing server 100. The communication unit 301 includes a communication interface circuit so that the proxy server 300 can establish the communication with the other servers and the devices via the network NW according to a predetermined communication protocol.

In addition, the communication unit 301 corresponds to the re-encryption key acquisition unit configured to acquire the re-encryption key from each of the data providing servers 100. The acquired re-encryption key is stored in the storage unit 302.

Furthermore, the communication unit 301 can transmit the converted sensitive data stored in the storage unit 302 in accordance with the request from the calculation server 400 or transmit the converted sensitive data to the calculation server 400 when the sensitive data is converted.

The storage unit 302 has a similar function as the storage unit 103 of the data providing server 100. The storage unit 302 stores computer programs, database, tables and the like used for various processing of the proxy server 300. The computer programs can be installed in the storage unit 302 from a portable computer-readable recording medium using a conventionally known setup program, for example.

The conversion unit 303 converts the sensitive data acquired from the data providing server 100 into the sensitive data in the predetermined encryption space using the corresponding re-encryption key. The conversion unit 303 executes the conversion by encrypting the acquired sensitive data in accordance with the encryption scheme of the acquired sensitive data. For example, the sensitive data encrypted by the homomorphic encryption scheme in the data providing server 100 is re-encrypted by the same homomorphic encryption scheme using the re-encryption key acquired from the corresponding data providing server 100. The sensitive data encrypted by AES is re-encrypted by the same AES using the re-encryption key. The conversion unit 30 stores (registers) the converted sensitive data in the storage unit 302.

As described above, when the sensitive data is encrypted by the predetermined encryption scheme for each attribute value of the attribute item of the sensitive data, the attribute value of the attribute item is encrypted in accordance with the predetermined encryption scheme. Accordingly, the sensitive data provided from the same data providing server 100 may include different encryption schemes in accordance with the data format of the attribute value of the attribute item. For example, the attribute value re-encrypted by the homomorphic encryption scheme and the attribute value re-encrypted by AES may be included. However, since the re-encryption key generated based on the system key managed by the key management server 200 is used for the re-encryption, the attribute value of each of the attribute items is converted into the identical encryption space for each predetermined encryption scheme.

The control unit 304 controls the functions of the proxy server 300. The control unit 304 is a processor such as a CPU (Central Processing Unit) operated based on the programs preliminarily stored in the storage unit 302. The control unit 304 reads the converted sensitive data from the storage unit 302 in accordance with the request from the calculation server 400 and controls the communication unit 301 to transmit the converted sensitive data to the calculation server 400.

### (Functional configuration of calculation server 400)

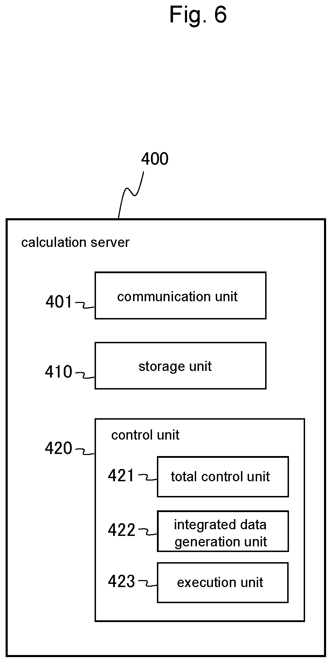

Fig. 6 is a functional block diagram showing an example of a functional configuration of the calculation server 400. With reference to Fig. 6, an example of the functional configuration of the calculation server 400 will be explained.

The calculation server 400 includes a communication unit 401, a storage unit 410 and a control unit 420.

The communication unit 401 includes a communication interface circuit so that the calculation server 400 can establish the communication with the other servers and the devices via the network NW according to a predetermined communication protocol. The communication unit 401 transmits the received data to the control unit 420 and the data received from the control unit 420 to the servers and the devices via the network NW. Note that the communication unit 401 transmits and receives the data to/from the devices and the like via the network NW using a secure communication channel where security is ensured. The explanation of the method of constructing the secure communication channel and the communication method is omitted since they are well known technology.

The storage unit 410 includes a memory device such as a RAM (Random Access Memory) and a ROM (Read Only Memory), a fixed disk device such as a hard disk drive or a portable disk device such as a flexible disk and an optical disc, for example. In addition, the storage unit 410 stores computer programs, database, tables and the like used for various processing of the calculation server 400. The computer programs can be installed in the storage unit 410 from a portable computer-readable recording medium using a conventionally known setup program, for example. The portable recording medium can be a CD-ROM (Compact Disc Read Only Memory) and a DVD-ROM (Digital Versatile Disc Read Only Memory), for example. The computer programs can be installed from a predetermined server, for example.

Furthermore, the storage unit 410 stores the converted sensitive data received by the communication unit 401 from the proxy server 300.

The control unit 420 includes a total control unit 421, an integrated data generation unit 422 and an execution unit 423. The control unit 421 controls the functions of the calculation server 400. The control unit 421 is a processor such as a CPU (Central Processing Unit) operated based on the programs preliminarily stored in the storage unit 410. Note that a DSP (Digital Signal Processor) or the like can be used as the total control unit 421. In addition, control circuits such as an LSI (Large Scale Integration), an ASIC (Application Specific Integrated Circuit) and an FPGA (Field- Programmable Gate Array) can be used as the total control unit 421.

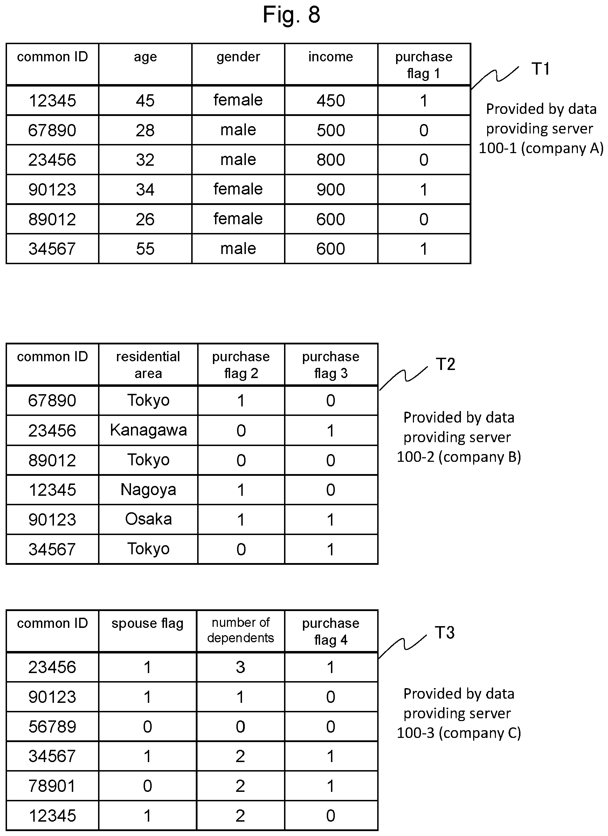

In accordance with the control of the total control unit 421, the integrated data generation unit 422 integrates the converted sensitive data received from the proxy server 300 via the communication unit 401 and stored in the storage unit 410 based on the identifier (common ID in the example of the later described examples of Figs. 8 to 11) included in the sensitive data as the attribute item to generate the integrated data. The integrated data generation unit 422 stores the generated integrated data in the storage unit 410.

The execution unit 423 executes the secure computing based on the converted sensitive data. The execution unit 423 stores the execution result in the storage unit 410. Here, the secure computing executed by the execution unit 423 is the model learning and the inference achieved by the machine learning. The analysis algorithms of statistical method and deep learning can be used. The execution unit 423 can execute the secure computing on the sensitive data provided by one of the data providing servers 100 or execute the secure computing on the integrated data generated by the integrated data generation unit 422. As described above, the integrated sensitive data is converted into the sensitive data in the predetermined encryption space for each of the attribute items by the homomorphic encryption scheme, the order-preserving encryption scheme, the retrievable encryption scheme or the AES encryption where the complete matching is possible in the encrypted text. For example, the calculation related to addition, subtraction, multiplication and division and the calculation related to the retrieval and the analysis can be executed on the attribute items in the encrypted state.

### (Functional configuration of terminal device 500)

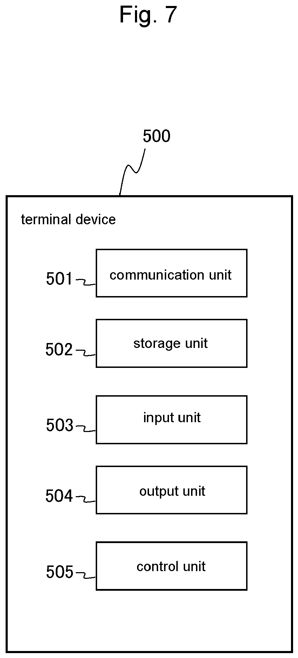

Fig. 7 is a functional block diagram showing an example of a functional configuration of a terminal device 500. With reference to Fig. 7, an example of the functional configuration of the terminal device 500 will be explained.

The terminal device 500 includes a communication unit 501, a storage unit 502, an input unit 503, an output unit 504 and a control unit 505. As described above, the terminal device 500 can be an information processing device operated by the user who belongs to the organization joining in the platform (data sharing system 1), for example.

The communication unit 501 has a similar function as the communication unit 101 of the data providing server 100. The communication unit 501 includes a communication interface circuit so that the terminal device 500 can establish the communication with the other servers and the devices via the network NW according to a predetermined communication protocol. The communication unit 501 transmits the received data to the control unit 505 and transmits the data received from the control unit 505 to the other servers and the devices via the network NW. In addition, the user operating the terminal device 500 has the access authority for using the execution result of the secure computing of the sensitive data. The terminal device 500 acquires the system key (system secret key and/or system common key) for decrypting the execution result from the key management server 200 via the communication unit 501.

The storage unit 502 has a similar function as the storage unit 103 of the data providing server 100. The storage unit 502 stores computer programs, database, tables and the like used for various processing of the terminal device 500. The computer programs can be installed in the storage unit 502 from a portable computer-readable recording medium using a conventionally known setup program, for example. In addition, the storage unit 502 can store the system key for decrypting the execution result of the secure computing from the calculation server 400.

The input unit 503 is an interface for receiving a user input of the terminal device 500. The input unit 503 can be a keyboard, a touch panel and a microphone for detecting a sound input, for example. However, the input unit 503 is not limited to the above described devices. The user inputs the processing request of the data processing through the input unit 503.

The output unit 504 is an interface for outputting the information and notifying the user. The output unit 504 can be a display and a speaker for outputting sound, for example. However, the output unit 504 is not limited to the above described devices. The output unit 504 provides the execution result of the data processing to the user by displaying it on the display, for example.

The control unit 505 controls the functions of the terminal device 500. The control unit 505 is a processor such as a CPU (Central Processing Unit) operated based on the programs preliminarily stored in the storage unit 502. The control unit 505 transmits the processing request of the data processing inputted through the input unit 503 to the calculation server 400 via the communication unit 501. In addition, the control unit 505 acquires the execution result of the secure computing via the communication unit 501. The control unit 505 decrypts the execution result of the secure computing by the system key stored in the storage unit 502 to obtain the execution result.

Fig. 8 is a drawing showing an example of the data structure of the sensitive data. In the present embodiment, the sensitive data is the information about the individual. The sensitive data is the attribute value (string or numerical value) of the attribute item (column) such as the age, the gender, the income, the residential area and the purchase information. Furthermore, the sensitive data can include the identifier (common ID) as one of the attribute items for uniquely identifying the individual as the integrated key. The identifier can be a numerical value, a string or the combination of the numerical value and the string. For simplifying the explanation, predetermined attribute items are shown in Fig. 8. However, the not illustrated attribute items can be further included in the sensitive data. In addition, the sensitive data is not limited to the information about the individual. The sensitive data can be confidential information (e.g., sensing data and log data) related to the system of IoT/NW devices, industrial devices and the like. Furthermore, the integrated key is not limited to the identifier uniquely identifying the individual. An arbitrary value can be used as the integrated key as long as it can uniquely identify the data in a plurality of tables.

In Fig. 8, tables T1, T2 and T3 storing the attribute values of the attribute items are shown. The table 1 shows the sensitive data provided by the data providing server 100-1 (i.e., the data possessed by the company A). In the table T1, the sensitive data includes "common ID" as the identifier for uniquely identifying the individual, "age" indicating the age of the individual, "gender" indicating the gender of the individual, "income" indicating the income of the individual, and "purchase flag 1" indicating the presence or absence of the purchase of the product 1 purchased by the individual as the attribute items. In the table T1, the attribute values of the attribute items of "common ID," "age," "income" and "purchase flag 1" are the numerical values. Although the attribute value of "gender" is the category (string) in Fig. 8, the category can be also shown by the numerical value by associating the gender with the numerical value, for example.

In the table T1, the attribute value "12345" is stored for the attribute item "common ID," the attribute value "45" is stored for the attribute item "age," the attribute value "female" is stored for the attribute item "gender," the attribute value "450" is stored for the attribute item "income" and the attribute value "1" is stored for the attribute item "purchase flag 1." This means that the age of the individual who has the common ID of 12345 is 45 years, the gender is female, the income is 450 (ten thousand yen) and the individual has already bought the product 1. Similarly, for the attribute values "67890," "23456," "90123," "89012" and "34567" of the attribute item "common ID," the attribute values are stored for each of the attribute items.

The table 2 shows the sensitive data provided by the data providing server 100-2 (i.e., the data possessed by the company B). The data providing server 100-2 provides the sensitive data including the attribute item different from that of the company A possessing the sensitive data shown in the table T1.

In the table T2, the sensitive data includes "common ID" as the identifier for uniquely identifying the individual, "residential area" indicating the area in which the individual lives, "purchase flag 2" indicating the presence or absence of the purchase of the product 2 purchased by the individual, and "purchase flag 3" indicating the presence or absence of the purchase of the product 3 purchased by the individual as the attribute items. In the table T2, the attribute values of the attribute items "common ID," "purchase flag 2" and "purchase flag 3" are the numerical values, while the attribute values of the attribute item "residential area" are the string. Although the attribute value of "residential area" is the category (string) in Fig. 8, the category can be also shown by the numerical value by associating the area with the numerical value, for example. For example, in the table T2, the attribute value "67890" is stored for the attribute item "common ID," the attribute value "Tokyo" is stored for the attribute item "residential area," the attribute value "1" is stored for the attribute item "purchase flag 2" and the attribute value "0" is stored for the attribute item "purchase flag 3." This means that the residential area of the individual who has the common ID of 67890 is Tokyo, the individual has already bought the product 2 and the individual has not bought the product 3 yet. Similarly, for the attribute values "23456," "89012," "12345," "90123" and "34567" of the attribute item "common ID," the attribute values are stored for each of the attribute items.

Although the attribute items are different between the table T1 and the table T2 except for "common ID," the record shown by the same "common ID" corresponds to the same individual. For example, the record (individual) identified by the attribute value "67890" of "common ID" in the table T1 is same as the record (individual) identified by the attribute value "67890" of "common ID" in the table T2.

The table T3 shows the sensitive data provided by the data providing server 100-3 (i.e., the data possessed by the company C). The data providing server 100-3 provides the sensitive data different from the sensitive data of the company A and the company B possessing the sensitive data shown in the table T1 and the table T2.

In the table T3, the sensitive data includes "common ID" as the identifier for uniquely identifying the individual, "spouse flag" indicating the presence or absence of the spouse, "number of dependents" indicating the number of the dependents and "purchase flag 4" indicating the presence or absence of the purchase of the product 4 purchased by the individual as the attribute item. In the table T3, the attribute values of the attribute items "common ID," "spouse flag," "number of dependents" and "purchase flag 4" are the numerical values. For example, in the table T3, the attribute value "23456" is stored for the attribute item "common ID," the attribute value "1" is stored for the attribute item "spouse flag," the attribute value "3" is stored for the attribute item "number of dependents" and the attribute value "1" is stored for the attribute item "purchase flag 4." This means that the individual who has the common ID of 23456 has the spouse, the individual has three dependents and the individual has already bought the product 4. Similarly, for the attribute values "90123," "56789," "34567," "78901" and "12345" of the attribute item "common ID," the attribute values are stored for each of the attribute items.

The attribute items are different between the table T3 and the table T1 or T2 except for "common ID." In addition, the attribute values "56789" and "78901" are included only in the table T3 as the attribute item "common ID." Namely, it is not necessary that the same group of the records is included in all tables. The table can include the group of the records that are different from those of another table. In the present embodiment, as shown in Fig. 8, the attribute items included in the sensitive data provided by each of the data providing servers are different except for "common ID" (identifier). However, the same attribute item can be included as another embodiment. In that case, a system administrator or the like can properly specify and determine which of the data providing servers is prioritized as the attribute value of the integrated data.

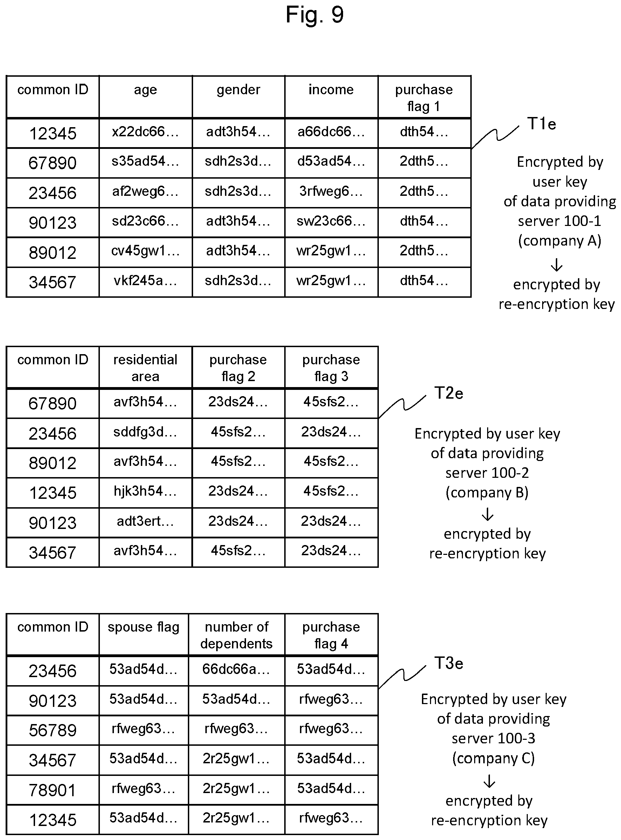

Fig. 9 is a drawing showing an example of the data structure of the encrypted sensitive data. In Fig. 9, the tables T1e, T2e and T3e in which the attribute values of the attribute items are encrypted except for "common ID" are shown.

In the table T1e, the attribute values of the table T1 are encrypted except for "common ID" based on the user key (user public key or user common key) managed by the data providing server 100-1 (company A). For example, the attribute items "age," "income" and "purchase flag 1" whose attribute values are indicated by the numerical values are encrypted by the homomorphic encryption scheme and/or the order-preserving encryption schemes, while the attribute item "gender" whose attribute values are indicated by the string is encrypted by the retrievable encryption scheme. For simplifying the explanation, the values encrypted by the homomorphic encryption scheme are shown in the table T1e for the data of the attribute values indicated by the numerical value (hereafter, same in the tables T2e and T3e).

In the table T2e, the attribute values of the table T2 are encrypted except for "common ID" based on the user key (user public key or user common key) managed by the data providing server 100-2 (company B). For example, the attribute items "purchase flag 2" and "purchase flag 3" whose attribute values are indicated by the numerical values are encrypted by the homomorphic encryption scheme and/or the order-preserving encryption scheme, while the attribute item "residential area" whose attribute values are indicated by the string is encrypted by the retrievable encryption scheme.

In the table T3e, the attribute values of the table T3 are encrypted except for "common ID" based on the user key (user public key or user common key) managed by the data providing server 100-3 (company C). For example, the attribute items "spouse flag," "number of dependents" and "purchase flag 4" whose attribute values are indicated by the numerical values are encrypted by the homomorphic encryption scheme and/or the order-preserving encryption scheme.

The proxy server 300 acquires the table T1e from the data providing server 100-1 as the encrypted sensitive data. The proxy server 300 encrypts the attribute items of the table T1e by the encryption scheme corresponding to the encryption scheme of the attribute items of the table T1e using the re-encryption key corresponding to the data providing server 100-1. For example, the attribute items "age" "income" and "purchase flag 1" whose attribute values are indicated by the numerical values are encrypted by the homomorphic encryption scheme or the order-preserving encryption scheme. Thus, these attribute items are similarly encrypted by the homomorphic encryption scheme or the order-preserving encryption scheme using the re-encryption key (key generated based on the user secret key and the system public key). The attribute item "gender" whose attribute values are indicated by the string is encrypted by AES or the retrievable encryption scheme. Thus, the attribute item is similarly encrypted by AES or the retrievable encryption scheme using the re-encryption key (key generated based on the user common key and the system common key).

The proxy server 300 encrypts the tables T2e and T3e by the re-encryption key similar to the table T1e.

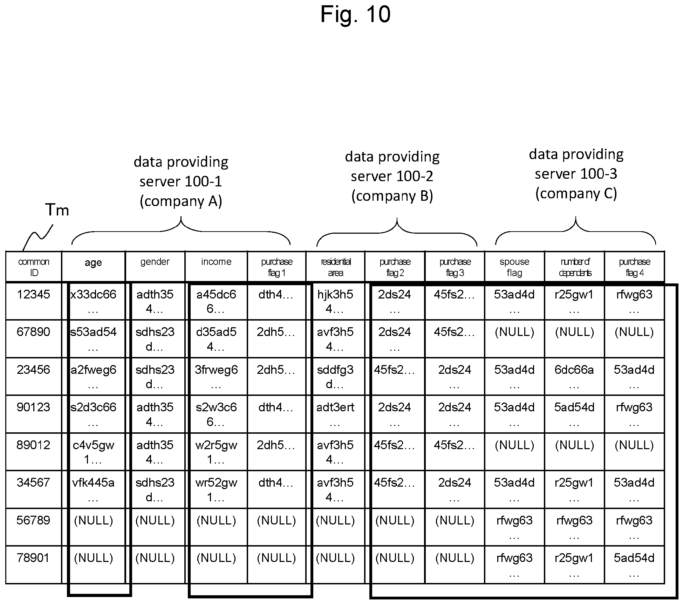

Fig. 10 is a drawing showing an example of the data structure of the integrated data. In Fig. 10, an integrated table Tm is the table formed by integrating the tables T1e, T2e and T3e shown in Fig. 9 by using the attribute values (identifiers) of the attribute item "common ID" as the integrated key. Namely, the integrated data is the table including "common ID," "age," "gender," "income," "purchase flag 1," "residential area," "purchase flag 2," "purchase flag 3," "spouse flag," "number of dependents" and "purchase flag 4" as the attribute items wherein the attribute values of the attribute items except for "common ID" are encrypted by the re-encryption key as described in Fig. 9.

In the integrated table Tm, the attribute items (columns) "age," "gender," "income" and "purchase flag 1" are the sensitive data provided by the data providing server 100-1 (company A). The attribute items (columns) "residential area," "purchase flag 2" and "purchase flag 3" are the sensitive data provided by the data providing server 100-2 (company B). The attribute items (columns) "spouse flag," "number of dependents" and "purchase flag 4" are the sensitive data provided by the data providing server 100-3 (company C).

As for the attribute values of the attribute items included in the table T3 and not included in the tables T1 and T2 (e.g., the attribute values "56789" and "78901" of "common ID"), an administrator of calculation server 400 or the like can arbitrarily determine to store a blank (NULL) value or a dummy numerical value, for example. Alternatively, it is also possible to delete the record in which the attribute values other than the attribute value of the attribute item "common ID" is not stored in the integrated data.

Namely, in the example of Fig. 10, the integration processing including the integration of the table in a lateral direction (i.e., addition of "attribute item" (column) and the integration of the table in a vertical direction (i.e., addition of "record") is performed using the attribute item "common ID" shown in the tables T1e, T2e and T3e of Fig. 9 as the integrated key.

The attribute values of the attribute items "age," "income," "purchase flag 1," "purchase flag 2," "purchase flag 3," "spouse flag," "number of dependents" and "purchase flag 4" are encrypted by the homomorphic encryption scheme, the order-preserving encryption scheme or the like using the re-encryption key (key generated based on the user secret key and the system public key) and converted into the identical encryption space. The attribute values of the attribute items "gender" and "residential area" are encrypted by AES, the retrievable encryption scheme or the like using the re-encryption key (key generated based on the user common key and the system common key) and converted into the identical encryption space. Consequently, the secure computing can be executed on the attribute values converted into the identical encryption space in the calculation server 400. When the fully homomorphic encryption is used, the re-encryption key can be generated in the data providing server 100 based on user public key information and user secret key information.

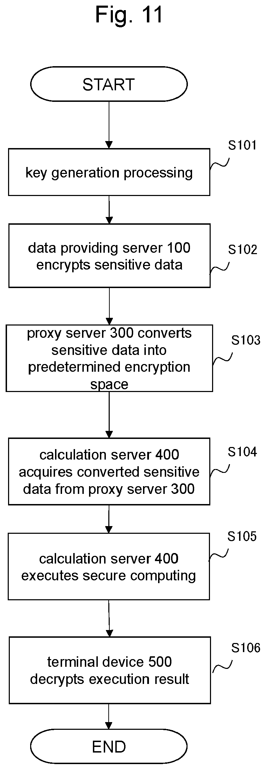

Fig. 11 is a flow chart showing an example of the processing concerning the embodiment 1. With reference to Fig. 11, a flow of re-encrypting the sensitive data provided by each organization joined in the platform (data sharing system 1) into the predetermined encryption space by the proxy server 300 and executing the data processing by the secure computing. The flow of the processing shown in Fig. 11 is merely an example. The flow is not limited to the orders shown in Fig. 11. In the following explanation, the scheme based on the public key encryption scheme is used as the scheme of converting the encrypted sensitive data into the predetermined encryption space for simplifying the explanation.

In the step S101, a key generation processing is executed in the data sharing system 1. The key management server 200 generates the system key (a key pair of the system public key and the system secret key). In addition, the data providing server 100 generates the user key (a key pair of the user public key and the user secret key). Furthermore, the data providing server 100 acquires the system public key generated by the key management server 200 and generates the re-encryption key based on the user secret key and the system public key. When the fully homomorphic encryption is used, the re-encryption key is basically generated in the data providing server 100 of generating the user public key and the user secret key. The key management server 200 does not generate the re-encryption key (excluding the case where an entrustment of generating the key is received). The key management server 200 receives the re-encryption key generated in the data providing server 100 and manages the re-encryption key in the key management server 200 if required.

In the step S102, the data providing server 100 encrypts the sensitive data acquired from the organization or the like joining in the platform by the predetermined encryption scheme using the user public key. In Fig. 11, the sensitive data is encrypted by the homomorphic encryption scheme, for example. The data providing server 100 transmits the encrypted sensitive data and the re-encryption key to the proxy server 300.

In the step S103, the proxy server 300 encrypts the sensitive data received from the data providing server 100 using the re-encryption key received from the data providing server 100. Thus, the sensitive data is converted into the sensitive data in the predetermined encryption space. In the example of Fig. 11, since the sensitive data is encrypted by the homomorphic encryption scheme in the step S102, the proxy server 300 encrypts the sensitive data using the re-encryption key by the homomorphic encryption scheme corresponding to the encryption scheme of the sensitive data.

In the step S104, the calculation server 400 acquires the converted sensitive data from the proxy server 300. The calculation server 400 can request the proxy server 300 to transmit the sensitive data as the object of the processing in accordance with the data processing request from the terminal device 500, for example. The proxy server 300 transmits the sensitive data converted into the predetermined encryption space to the calculation server 400 as the object of the processing in accordance with the request from the calculation server 400.

In the step S105, the calculation server 400 executes the secure computing in accordance with the data processing request of the terminal device 500. The calculation server 400 generates the integrated data by integrating a plurality of sensitive data and executes the model learning and the inference on the integrated data by the machine learning. Note that the model learning and the like can be executed on the sensitive data provided by one of the data providing servers 100. The calculation server 400 transmits the execution result of the secure computing to the terminal device 500 from which the data processing is requested.

In the step S106, the terminal device 500 decrypts the execution result of the secure computing by the system secret key. Consequently, the terminal device 500 can use the decrypted execution result as a plaintext data. The system secret key can be previously given from the key management server 200 to the terminal device 500 as the user having the authority of using the execution result. Alternatively, the terminal device 500 can acquire the system secret key as the authenticated user when transmitting the data processing request. As described above, the data processing is executed in the data sharing system 1.

### (Hardware configuration diagram)

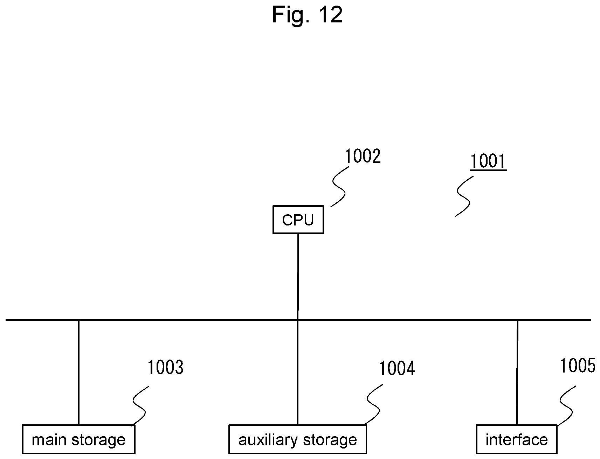

Fig. 12 is a block diagram showing a hardware configuration of the proxy server 300. The proxy server 300 is implemented in a computer 1001. The computer 1001 includes a CPU 1002, a main storage 1003, an auxiliary storage 1004 and an interface 1005.

The operations of each configuration of the proxy server 300 are stored in the auxiliary storage 1004 in the form of programs. The CPU 1002 reads the programs from the auxiliary storage 1004, expands the programs in the main storage 1003, and executes the above described processing according to the programs. In addition, the CPU 1002 secures a storage area in the main storage 1003 according to the programs. Specifically, the programs make the computer 1001 execute the data processing.

Note that the auxiliary storage 1004 is an example of a non-transitory tangible medium. A magnetic disk, a magneto-optical disk, a CD-ROM, a DVD-ROM, a semiconductor memory and the like connected via the interface 1005 can be listed as the other examples of the non-transitory tangible medium. Furthermore, when the programs are distributed to the computer 1001 via the network, the computer 1001 receiving the delivery can expand the programs in the main storage 1003 to execute the processing.

In addition, the programs can be prepared for achieving only a part of the above described functions. Furthermore, the programs can be a so-called difference file (difference program) for achieving the above described functions while combined with the other programs already stored in the auxiliary storage 1004. Note that the hardware configuration shown in Fig. 12 can be used also for the data providing servers 100, the key management server 200, the calculation server 400 and the terminal device 500. Same as the above described proxy server 300, the operations of the components of the above described devices are also achieved by the CPU which is operated in accordance with the programs stored in the auxiliary storage.

### (Explanation of effect)

As described above, the data sharing system of the present embodiment includes a key management server configured to manage the system key for converting the encrypted data into the identical encryption space. In addition, the data providing server corresponding to the organization or the like joining the system encrypts the sensitive data by the predetermined encryption scheme using the user key corresponding to the organization and transmits the encrypted sensitive data to the proxy server. Here, the user key is different from the system key. The proxy server converts the acquired encrypted sensitive data into the predetermined encryption space based on the re-encryption key generated based on the user key and the system key. Then, the calculation server executes the secure computing based on the converted sensitive data.

Consequently, the execution result of the secure computing of the sensitive data converted into the predetermined encryption space based on the re-encryption key can be decrypted by the system key. Accordingly, the data processing can be executed on the sensitive data possessed by each of the data providing servers without disclosing (decrypting) the content of the sensitive data to the others. In addition, since the proxy server and the calculation server are provided, the secure computing can be executed while the proxy server and the calculation server are partly communicated and associated with each other when the algorithms of the machine learning and deep learning or the data mining are executed in the secure computing. Thus, the execution performance can be improved.

In addition, the data sharing system of the present embodiment manages the system key (system secret key and/or system common key) for decrypting the execution result of the secure computing in the key management server. The authority for using the execution result of the secure computing can be given by providing the system key managed in the key management server. Thus, the cooperation between the data providing servers is not required and the management of the authority is easy. In addition, the processing can be executed at higher speed compared to the case of requiring the cooperation between the data providing servers for using the execution result.

Furthermore, the data sharing system of the present embodiment executes the secure computing on the sensitive data including the attribute values having different encryption schemes (e.g., the scheme where the retrieval can be performed in the encrypted state and the homomorphic encryption scheme where the addition and multiplication can be performed). Consequently, the statistical method or the model learning and the inference achieved by the analysis algorithms such as the machine learning and the deep learning can be executed on the sensitive data in the encrypted state. Thus, the sensitive data can be utilized securely.

Furthermore, the data sharing system of the present embodiment integrates the sensitive data to execute the secure computing. Consequently, the organization joining in the data sharing system can easily utilize the sensitive data owned by own organization without disclosing the sensitive data to the other organizations. In addition, since the data processing can be executed on the sensitive data provided from a plurality of organizations, the accuracy of the model learning and the inference can be improved.

### [Embodiment 2]

In the present embodiment, the proxy server constructs a virtual execution environment protected from a standard execution environment, and the sensitive data encrypted in each of the data providing servers is decrypted and then converted into the identical encryption space in the virtual execution environment.

A data sharing system 2 of the embodiment 2 is different from the data sharing system 1 of the embodiment 1 in that the data sharing system 2 includes a data providing server 600 and a proxy server 700 instead of the data providing server 100 and the proxy server 300.

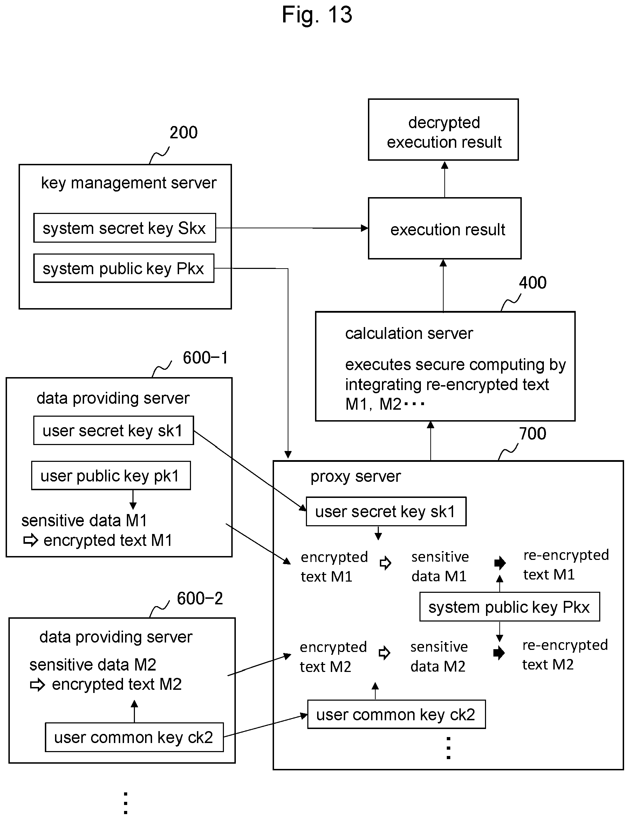

Fig. 13 is a schematic diagram of the processing in the embodiment 2. With reference to Fig. 13, an outline of the processing in the data sharing system 2 will be explained.

The proxy server 700 of the embodiment 2 constructs the virtual execution environment protected from the standard execution environment and the sensitive data encrypted in each of the data providing servers 600 is decrypted and then converted into the identical encryption space in the virtual execution environment. The virtual execution environment is the environment accessed from the standard execution environment accessed only by the authenticated or permitted users. The authentication and permission are automatically performed when the conditions are preliminarily defined. When the conditions are not defined, the processing of the authentication and permission can be performed for each access. In addition, the virtual execution environment can be the environment trusted by the standard execution environment. Furthermore, the virtual execution environment is preferably formed in a short time. Consequently, even when the virtual execution environment is attacked by a cyber terrorist, security can hardly be broken in time. Thus, safety on security can be ensured.

The data providing server 600 generates the user key and encrypts the sensitive data by the user key. The data providing server 600-1 generates, for example, a key pair of a user public key pk1 and a user secret key sk1 and encrypts sensitive data M1 by an arbitral (public key) encryption scheme using the user public key pk1. The data providing server 600-2 generates, for example, a user common key ck2 and encrypts sensitive data M2 by an arbitral (common key) encryption scheme using the user common key ck2.

Namely, each of the data providing servers 600 generates a key pair of the user public key and the user secret key and/or the user common key as the user key. In addition, the encryption can be performed by the encryption scheme in accordance with the data format or the like included in the sensitive data. Each of the data providing servers 600 transmits the key (user secret key, user common key) for decrypting the sensitive data to the proxy server 700 via a secure path.

The key management server 200 generates the system key used for converting the sensitive data into the predetermined encryption space. The system key can be a key pair of the system public key Pkx and the system secret key Skx and/or a system common key Ckx (not illustrated). The key management server 200 transmits the system key (system public key Pkx and/or system common key Ckx) to the proxy server 700.

The proxy server 700 constructs the virtual execution environment protected from the standard execution environment and decrypts the encrypted text M in the virtual execution environment using the user key to generate sensitive data M. The proxy server 700 encrypts the decrypted sensitive data using the system key by the encryption scheme capable of performing the secure computing to generate re-encrypted text M. For example, the sensitive data can be encrypted by the homomorphic encryption scheme using the system public key Pkx or by the retrievable encryption scheme using the system common key Ckx. Alternatively, the sensitive data can be encrypted by the encryption scheme corresponding to the data format or the like included in the sensitive data.

For example, the encrypted text M1 transmitted from the data providing server 600-1 is decrypted by the user secret key sk1 and converted into the sensitive data M1 which is a plaintext. Then, the sensitive data M1 is encrypted by the system public key Pkx and converted into a re-encrypted text M1. For example, the encrypted text M2 transmitted from the data providing server 600-2 is decrypted by the user common key ck2 and converted into the sensitive data M2 which is a plaintext. Then, the sensitive data M2 is encrypted by the system public key Pkx and converted into a re-encrypted text M2.

The calculation server 400 executes the secure computing on the re-encrypted text M. It is also possible to generate an integrated data by integrating a plurality of re-encrypted texts M1, M2... as described in Figs. 8 to 11 and execute the secure computing on the integrated data.

The execution result of the secure computing can be decrypted by the system key. For example, the execution result of the secure computing executed on the sensitive data using the system public key Pkx can be decrypted by the system secret key Skx. For example, the execution result of the secure computing executed on the sensitive data using the system common key Ckx can be decrypted by the system common key Ckx.

In the virtual execution environment protected from the standard execution environment, the access from the unauthenticated users can be prevented. Thus, the processing of converting the encrypted sensitive data into the predetermined encryption space can be performed securely. In addition, since the decrypted sensitive data is encrypted by the predetermined encryption scheme and converted into the predetermined encryption space, the data processing can be executed with high processing efficiency. Furthermore, the virtual execution environment is preferably formed in a short time. Consequently, even when the virtual execution environment is attacked by a cyber terrorist, security can hardly be broken in time. Thus, safety on security can be ensured.

### (Functional configuration of data providing server 600)

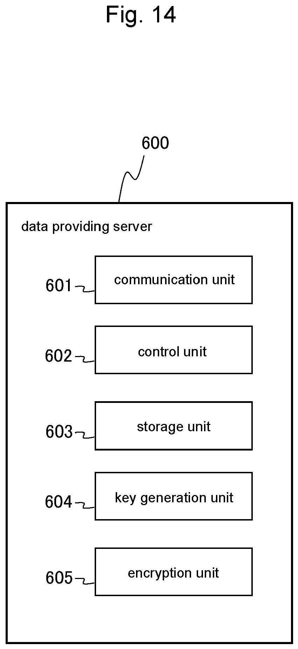

Fig. 14 is a functional block diagram showing an example of a functional configuration of the data providing server 600. With reference to Fig. 14, an example of the functional configuration of the data providing server 600 will be explained.

The data providing server 600 includes a communication unit 601, a control unit 602, a storage unit 603, a key generation unit 604 and an encryption unit 605.

The communication unit 601 has a similar function as the communication unit 101. The communication unit 601 transmits and receives the data to/from the devices connected via the network NW, the devices connected locally and the like using a secure communication channel where security is ensured. The explanation of the method for constructing the secure communication channel and the communication method is omitted since they are well known technology using a common key (e.g., session key), a public key and the like.

The control unit 602 has a similar function as the control unit 102 and controls functions of the data providing server 600.

The storage unit 603 has a similar function as the storage unit 103 and stores computer programs, encryption programs, keys and the like used for various processing of the data providing server 600.

The key generation unit 604 generates the user key. The user key includes a key pair of the user public key and the user secret key and/or a user common key. The key generation unit 604 can generate the key in accordance with the encryption scheme requested by the encryption unit 605, for example. The user key is transmitted to the proxy server 700 via the communication unit 601 through a secure communication channel.

The encryption unit 605 has a similar function as the encryption unit 105 and encrypts the sensitive data by the predetermined encryption scheme using the user key which is different from the system key. The encrypted sensitive data is transmitted to the proxy server 700 via the communication unit 601.

### (Functional configuration of proxy server 700)

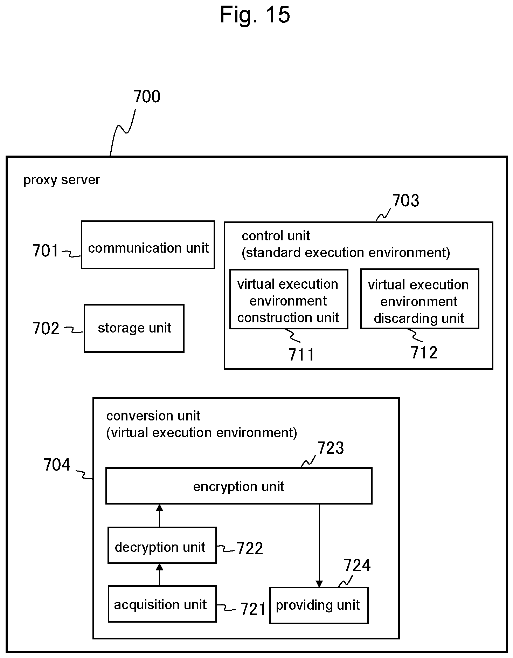

Fig. 15 is a functional block diagram showing an example of a functional configuration of the proxy server 700. With reference to Fig. 15, an example of the functional configuration of the proxy server 700 will be explained.

The proxy server 700 includes a communication unit 701, a storage unit 702, a control unit 703 and a conversion unit 704.

The communication unit 701 acquires the encrypted sensitive data from a plurality of data providing servers 100. In addition, the communication unit 701 acquires the system key (system public key and/or system common key) and the user key (user secret key and/or user common key) from the key management server 200 and stores them in the storage unit 702.

The storage unit 702 stores computer programs, database and the like used for various processing of the proxy server 300.

The control unit 703 includes a virtual execution environment construction unit 711 and a virtual execution environment discarding unit 712. The control unit 703 controls to construct the virtual execution environment for converting the sensitive data acquired from the data providing server 100 into the predetermined encryption space.

The virtual execution environment construction unit 711 constructs the virtual execution environment. For example, it is possible to construct the virtual execution environment each time when the encrypted sensitive data is received. Alternatively, it is possible to construct the virtual execution environment in accordance with the request from the calculation server 400. A not-illustrated OS is mounted on the virtual execution environment. The OS includes the conversion unit 704.

The virtual execution environment discarding unit 712 discards (eliminates) the above described virtual execution environment. The virtual execution environment discarding unit 712 discards the virtual execution environment by deleting a predetermined data indicating the virtual execution environment, for example. It is possible to discard the virtual execution environment after the sensitive data is converted into the predetermined encryption space or discard the virtual execution environment based on the instruction of the authenticated user, for example.

The conversion unit 704 includes an acquisition unit 721, a decryption unit 722, an encryption unit 723 and a providing unit 724.

The acquisition unit 721 corresponds to the virtual execution environment data acquisition unit and the virtual execution environment key acquisition unit. The acquisition unit 721 acquires the encrypted sensitive data and the user key and the system key corresponding to the sensitive data from the storage unit 702.

The decryption unit 722 decrypts the encrypted sensitive data by the user key corresponding to the data providing server 600 which encrypts the sensitive data.

The encryption unit 723 corresponds to the virtual execution environment conversion unit and encrypts the decrypted sensitive data using the system key. The encryption unit 723 executes the encryption in accordance with the encryption scheme of the encrypted sensitive data. For example, the sensitive data encrypted by the homomorphic encryption scheme in the data providing server 100 is re-encrypted by the same homomorphic encryption scheme using the system key acquired from the key management server 200. Alternatively, the sensitive data encrypted by AES is re-encrypted by the same AES using the system key.

Furthermore, the encryption unit 723 can execute the encryption by the encryption scheme in accordance with the processing purpose of the encrypted sensitive data. For example, when highly advanced algorithm calculation processing is executed on the sensitive data, the encryption unit 723 can re-encrypt the sensitive data encrypted by the encryption scheme suitable for storage, simple calculation or retrieval by the encryption scheme suitable for highly advanced algorithm calculation processing using the re-encryption key. More specifically, the sensitive data encrypted by the order-preserving encryption scheme can be re-encrypted by the homomorphic encryption scheme. Alternatively, the sensitive data encrypted by the homomorphic encryption scheme can be re-encrypted by the fully homomorphic encryption scheme. Note that the encryption unit 723 can convert the sensitive data into the predetermined encryption space by executing the re-encryption by the encryption scheme corresponding to the data format (e.g., string, numerical value) of the sensitive data.

The providing unit 724 provides the sensitive data converted into the predetermined encryption space by the encryption unit 723 to the standard execution environment or the like. For example, the converted sensitive data is stored in the storage unit 702.

In addition, the user key used when the decryption unit 722 decrypts the encrypted sensitive data can be discarded when the virtual execution environment discarding unit 712 discards the virtual execution environment.

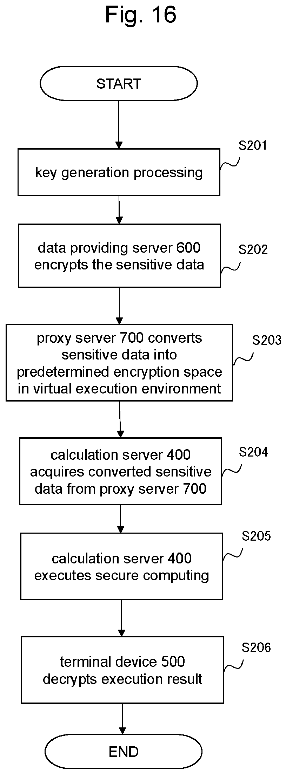

Fig. 16 is a flow chart showing an example of the processing concerning the embodiment 2. With reference to Fig. 16, a flow of decrypting the sensitive data provided by each organization joined in the platform (data sharing system 2) and then converting the sensitive data into the predetermined encryption space and executing the data processing by the secure computing in the virtual execution environment will be explained. The flow of the processing shown in Fig. 16 is merely an example. The flow is not limited to the orders shown in Fig. 16. In the following explanation, the scheme based on the public key encryption scheme is used as the scheme of converting the encrypted sensitive data into the predetermined encryption space for simplifying the explanation.

In the step S201, a key generation processing is executed in the data sharing system 2. The key management server 200 generates the system key (a key pair of the system public key and the system secret key) and transmits the system public key to the proxy server 700. In addition, the data providing server 600 generates the user key (a key pair of the user public key and the user secret key or the user common key).

In the step S202, the data providing server 600 encrypts the sensitive data acquired from the organization or the like joining in the platform by the predetermined encryption scheme using the user key. For example, the sensitive data can be encrypted by the homomorphic encryption scheme using the user public key or by AES using the user common key. The data providing server 600 transmits the sensitive data and the user key (user secret key and/or user common key) for decrypting the encrypted sensitive data to the proxy server 700.

In the step S203, the proxy server 700 constructs the virtual execution environment. The sensitive data received from the data providing server 600 is decrypted by the user key of the corresponding data providing server 600 in the constructed virtual execution environment and then converted into the sensitive data in the predetermined encryption space using the system public key. More specifically, the proxy server 700 encrypts the sensitive data by the homomorphic encryption scheme where the numerical calculation and the like can be executed in the encrypted state or the order-preserving encryption scheme, for example. The proxy server 700 discards the virtual execution environment after the conversion of the sensitive data.

In the step S204, the calculation server 400 acquires the converted sensitive data from the proxy server 700. The calculation server 400 requests the proxy server 700 to transmit the sensitive data as the object of the processing in accordance with the data processing request from the terminal device 500, for example. The proxy server 700 transmits the sensitive data converted into the predetermined encryption space to the calculation server 400 as the object of the processing in accordance with the request from the calculation server 400.

In the step S205, the calculation server 400 executes the secure computing in accordance with the data processing request of the terminal device 500. The calculation server 400 generates the integrated data by integrating a plurality of sensitive data and executes the model learning and the inference on the integrated data by the machine learning. Note that the model learning and the like can be executed on the sensitive data provided by one of the data providing servers 600. The calculation server 400 transmits the execution result of the secure computing to the terminal device 500 from which the data processing is requested.

In the step S206, the terminal device 500 decrypts the execution result of the secure computing using the system secret key. Consequently, the terminal device 500 can use the decrypted execution result as a plaintext data. The system secret key can be previously given from the key management server 200 to the terminal device 500 as the user having the authority of using the execution result. Alternatively, the terminal device 500 can acquire the system secret key as the authenticated user when transmitting the data processing request. As described above, the data processing is executed in the data sharing system 2.

### (Explanation of effect)

As described above, the data sharing system of the present embodiment includes a key management server configured to manage the system key for converting the encrypted data into the identical encryption space. In addition, the data providing server corresponding to the organization or the like joining the system encrypts the sensitive data by the predetermined encryption scheme using the user key of the corresponding organization and transmits the encrypted sensitive data to the proxy server. Here, the user key is different from the system key. The proxy server constructs the virtual execution environment protected from the standard execution environment and decrypts the acquired encrypted sensitive data and then converts the sensitive data into the predetermined encryption space based on the system key in the virtual execution environment. Then, the calculation server executes the secure computing on the converted sensitive data.

In the virtual execution environment protected from the standard execution environment, the access from the unauthenticated users can be prevented. Thus, the processing of converting the encrypted sensitive data into the predetermined encryption space can be performed securely. In addition, since the decrypted sensitive data is encrypted by the predetermined encryption scheme and converted into the predetermined encryption space, the sensitive data can be converted into the predetermined encryption space with high processing efficiency. Furthermore, since the virtual execution environment is formed in a short time, even when the virtual execution environment is attacked by a cyber terrorist, security can hardly be broken in time. Thus, safety on security can be ensured.

### <Modified example of embodiment 2>

The processing of constructing the virtual execution environment and converting the encrypted sensitive data into the predetermined encryption space in the virtual execution environment can be executed in the calculation server 400 instead of the proxy server 700.

Furthermore, the management of the system key can be managed by the calculation server 400 instead of the key management server 200.

Consequently, the transmission/reception processing through the communication channel can be reduced. Thus, the security is improved and the cost can be reduced.

The above described embodiments can be carried out in other various forms. Various omission, replacement and change can be applied within the range not deviating from the summary of the present invention. The embodiments and the variation of them are included in the range and summary of the present invention and also included in the invention described in the claims and the range equivalent to them.

### [Description of the Reference Numerals]

1: data sharing system; 100: data providing server; 101: communication unit; 102: control unit; 103: storage unit; 104: user key management unit; 105: encryption unit; 106: user decryption unit; 200: management server; 201: communication unit; 210: storage unit; 211: configuration file; 220: control unit; 221: total control unit; 223: execution unit; 230: decryption request unit; 300: calculation server; 301: communication unit; 302: control unit; 303: storage unit; 304: system key management unit; 305: system decryption unit; 310: process execution unit; 311: integrated data generation unit; 312: re-encryption unit; 313: secure computation unit; 400: common database; 401: communication unit; 402: storage unit; 410: process execution unit; 411: integrated data generation unit; 412: data processing unit; 413: decryption request unit; 500: terminal device; 501: communication unit; 502: storage unit; 503: input unit; 504: output unit; 505: control unit; 1001: computer; 1003: main storage; 1004: auxiliary storage; 1005: interface; 1300: calculation server; 1302: control unit; 1310: process execution unit; 1311: virtual execution environment construction unit; 1312: virtual execution environment discarding unit; 1321: re-encryption unit; 1331: acquisition unit; 1332: decryption unit; 1333: encryption unit; 1334: providing unit

## Claims

1. A data sharing system, comprising:
a plurality of data providing devices;
a key management device;
a proxy device; and
a calculation device, wherein
the key management device includes a key management unit configured to manage a system key,
each of the plurality of data providing devices includes:
a first sensitive data acquisition unit configured to acquire a sensitive data; and
an encryption unit configured to encrypt the sensitive data by a predetermined encryption scheme using a user key which is different from the system key,
the proxy device includes:
a second sensitive data acquisition unit configured to acquire the encrypted sensitive data from the plurality of data providing devices; and
a conversion unit configured to execute a conversion of the acquired sensitive data into the sensitive data in a predetermined encryption space based on the system key, and
the calculation device includes an execution unit configured to execute a secure computing based on the converted sensitive data.

2. The data sharing system according to claim 1, wherein
the system key includes a key pair of a system public key and a system secret key, and
the user key includes a key pair of a user public key and a user secret key corresponding to each of the plurality of data providing devices.

3. The data sharing system according to claim 2, wherein
the proxy device is configured to execute the conversion using a re-encryption key generated based on the system public key and the user secret key.

4. The data sharing system according to claim 3, wherein
each of the plurality of data providing devices further includes:
a system key acquisition unit configured to acquire the system public key from the key management unit of the key management device; and
a key generation unit configured to generate the re-encryption key using the user secret key and the system public key, and
the proxy device further includes a re-encryption key acquisition unit configured to acquire the re-encryption key from the plurality of data providing devices.

5. The data sharing system according to claim 3, wherein
the proxy device further includes:
a system key acquisition unit configured to acquire the system public key from the key management unit of the key management device;
a user key acquisition unit configured to acquire the user secret key from the plurality of data providing devices; and
a key generation unit configured to generate the re-encryption key using the user secret key and the system public key.

6. The data sharing system according to any one of claims 1 to 5, wherein
the system key includes a system common key, and
the user key includes a user common key corresponding to each of the plurality of data providing devices.

7. The data sharing system according to claim 6, wherein
the proxy device is configured to execute the conversion using the re-encryption key generated based on the system common key and the user common key.

8. The data sharing system according to any one of claims 1 to 7, wherein
the conversion unit of the proxy device is configured to execute the conversion in accordance with an encryption scheme of the encrypted sensitive data.

9. The data sharing system according to claim 1, wherein
the proxy device is configured to construct a virtual execution environment protected from a standard execution environment and execute the conversion in the virtual execution environment.

10. The data sharing system according to claim 9, wherein
the virtual execution environment includes:
a virtual execution environment data acquisition unit configured to acquire the encrypted sensitive data;
a virtual execution environment key acquisition unit configured to acquire a user key for decrypting the encrypted sensitive data and the system key; and
a virtual execution environment conversion unit configured to execute the conversion by encrypting the sensitive data, which is decrypted by using the user key, using the system key.

11. The data sharing system according to any one of claims 1 to 10, wherein
the calculation device is configured to execute a model learning and an inference achieved by a machine learning as the secure computing.

12. The data sharing system according to any one of claims 1 to 11, wherein
the calculation device is configured to execute the secure computing by integrating a plurality of the converted sensitive data.

13. The data sharing system according to any one of claims 1 to 12, wherein
the proxy device includes the key management device.

14. The data sharing system according to any one of claims 1 to 13, wherein
the encryption unit of the plurality of data providing devices is configured to encrypt at least a part of attribute values of attribute items included in the sensitive data by the predetermined encryption scheme, and
the conversion unit of the proxy device is configured to execute the conversion of the encrypted attribute values of the sensitive data encrypted by the predetermined encryption scheme by an encryption scheme corresponding to the predetermined encryption scheme.

15. The data sharing system according to claim 14, wherein
the sensitive data includes a first attribute value encrypted by a first encryption scheme and a second attribute value encrypted by a second encryption scheme.

16. A data sharing method executed in a system having a plurality of data providing devices, a key management device, a proxy device and a calculation device, the data sharing method comprising:
a step of managing a system key by the key management device;
a step of acquiring a sensitive data by the plurality of data providing devices;
a step of encrypting the sensitive data by a predetermined encryption scheme using a user key which is different from the system key by the plurality of data providing devices;
a step of acquiring the encrypted sensitive data from the plurality of data providing devices by the proxy device;
a step of converting the acquired sensitive data into a predetermined encryption space based on the system key by the proxy device; and
a step of executing a secure computing based on the converted sensitive data by the calculation device.

17. A data sharing program for making a system execute the data sharing program, the system comprising:
a plurality of data providing devices;
a key management device;
a proxy device; and
a calculation device, wherein
the key management device is configured to execute a step of managing a system key, the plurality of data providing devices is configured to execute:
a step of acquiring a sensitive data; and
a step of encrypting the sensitive data by a predetermined encryption scheme using a user key which is different from the system key,
the proxy device is configured to execute:
a step of acquiring the encrypted sensitive data from the plurality of data providing devices; and
a step of converting the acquired sensitive data into a predetermined encryption space based on the system key; and
a step of executing a secure computing based on the converted sensitive data, and
the calculation device is configured to execute a step of executing a secure computing based on the converted sensitive data.
